# EUROPEAN PATENT APPLICATION

(11) **EP 4 745 641 A1**
(43) Date of publication of application: **20.05.2026**
(21) Application number: 25206820.0
(22) Date of filing: 06.10.2025
(51) Int. Cl.: G02B 6/44, G01H 9/00

(54) **MONITORING OF BUFFER TUBE SHRINKAGE DURING FIBER OPTIC CABLE MANUFACTURING**

(30) Priority: 18.10.2024 IT 202400023205
(71) Applicant: Prysmian S.p.A., 20126 Milano (IT)
(72) Inventor: ALBUQUERQUE, Vitor Ferreira De, 20126 MILANO (IT); BARKER, Jeffrey Scott, Highland Heights, KY41076 (US); GRIFFITHS, Ian James, Eastleigh, Hampshire, S0506YU (GB); FERRI, Giuseppe, 20126 MILANO (IT)
(74) Representative: Cevini, Gaia

(57) **Abstract**

It is disclosed a method for monitoring the shrinkage of a buffer tube in a loose tube fiber optic cable comprising one or more optical fibres contained in said buffer tube. The method comprises, during the manufacturing of the loose tube fiber optic cable, which comprises guiding said buffer tube and said optical fibres from a clenching capstan to a main capstan: determining the value of a parameter indicative of a vibration of the buffer tube while the buffer tube is being guided from the clenching capstan to the main capstan; and checking whether the value of the parameter is within a tolerance range around a nominal value, the tolerance range and nominal value being associated with a predefined target level of shrinkage of the buffer tube.

## Description

### Technical field

The present invention relates to the field of loose tube fiber optic cables. In particular, the present invention relates to a method for monitoring the shrinkage of the buffer tube of a loose tube fiber optic cable, which is implemented during the manufacturing of the loose tube fiber optic cable. The present invention also relates to a system implementing the method for monitoring the shrinkage of the buffer tube.

### Background art

As known, the manufacturing of loose tube fiber optic cables involves coating the optical fiber or fibers with a plastic coating tube (the buffer tube) in which fibers are loosely housed. Typically, the fibers housed in the loose tube have a different length with respect to the loose tube itself, which is called Excess Fiber Length (EFL).

During the buffering process, the thermoplastic material which is used for the buffer tube is subject to thermal stresses that may lead to a post extrusion shrinkage of the buffer tube. The shrinkage of the buffer tube, in turn, changes the EFL of the final product.

The EFL in loose tube fiber optic cables can be controlled along the buffer tube production line by using a clenching capstan positioned in the cooling section between the cross head of the extruder and the main capstan. The clenching capstan typically runs at a slightly higher speed than the main capstan causing a compression of the buffer tube during its cooling down. This compression reduces the amount of post extrusion shrinkage and allows to control the EFL.

WO 2011/144815 A1 discloses a method and an arrangement in connection with a coating line, in which method a fibre, fibres or fibre bundles are unwound from payoff reels and guided to a plastic extruder by which a coating tube is formed around the fibre, the fibres or the fibre bundles. In the method and in the arrangement an assembly formed by the coating tube and the fibre, the fibres or the fibre bundles is guided to and pulled through a cooling through to a main capstan by using a clenching pull device grasping to the outer surface of the coating tube. The clenching pull device is placed inside the cooling trough whereby in order to eliminate post shrinkage of the coating tube the clenching pull device is run at a faster speed than the main capstan. The clenching pull device is a capstan comprising at least one pulley pair. The assembly formed by the coating tube and the fibre, the fibres or the fibre bundles is guided between the pulleys of the pulley pair.

Moreover, systems are known which allows in-line measuring the EFL by monitoring the length and speed of the fibers and the buffer tube along the production line. For instance, one of such systems is the Beta LaserMike EFL Pro Measurement System (https://www.ndc.com/cable-tube/products/efl-pro/) developed by NDC Technologies.

### Summary of the invention

The inventor noticed that loose tube fiber optic cables with apparently good EFL as measured during production are found to have increased EFL after being stored on a drum for about a day. In other situations, related to cable with stranded buffer tubes, buffer tubes may be seen to shrink back when mid span access opening is made.

In these cases, the problem may be that the buffer tube is not being compressed sufficiently by the clenching capstan during the manufacturing of the cable and there is no indication that this compression is insufficient until after the tube is made and a tube shrinkage test is done.

In view of the above, the Applicant has tackled the problem of providing a method for monitoring the shrinkage of the buffer tube of a loose tube fiber optic cable, which is implemented during the manufacturing of the loose tube fiber optic cable (namely, in-line). **In** particular, the Applicant has tackled the problem of providing a method for monitoring the shrinkage of the buffer tube during the manufacturing of the loose tube fiber optic cable which allows getting an in-line feedback on the compression of the buffer tube performed by the clenching capstan and determine whether such compression is sufficient to achieve a predetermined amount of shrinkage of the buffer tube.

During the manufacturing of the cable, after the buffer tube is compressed by the clenching capstan, the tension to which it is subject decreases and a buffer tube vibration is generated along the distance between the clenching capstan and the main capstan (this distance is called "effective length"), where the buffer tube and the fibers are coupled. The vibration depends on a number of factors, such as the elastic module of the buffer tube material, the pushing force to which the buffer tube is subject and the effective length. In turn, the elastic module of the material depends on the material type, the cross-section size, the melting temperature and the cooling temperature. Besides, the pushing force depends on various process parameters, such as the difference between the speed of the clenching capstan and the main capstan and the friction between the wheels of the clenching capstan and the buffer tube surface, the wheels gap, etc. The inventors noticed that the vibration of the buffer tube, in particular, the frequency and/or amplitude of such vibration over time, may be put in relation with the shrinkage of the buffer tube and, in particular, may give an in-line indication of the amount of shrinkage of the buffer tube, which means it gives this indication during the manufacturing process.

According to the present invention, the problem above is solved by a method for monitoring, during the manufacturing of a loose tube fiber optic cable, the shrinkage of the buffer tube, which provides for determining the vibration (frequency and/or amplitude) of the buffer tube between the clenching capstan and the mid capstan and checking whether this vibration is between a set of predefined boundaries. This allows to provide immediate feedback during the manufacturing process, which permits to know whether the tube is being compressed properly by the clenching capstan and, in case the tube is not being compressed properly, to adopt appropriate countermeasures.

In the present description the expressions "post extrusion shrinkage" and "shrinkage" as related to the buffer tube will be used interchangeably.

According to a first aspect, the present invention provides a method for monitoring the shrinkage of a buffer tube in a loose tube fiber optic cable, the cable comprising one or more optical fibres contained in the buffer tube, the method comprising, during the manufacturing of the loose tube fiber optic cable, which comprises guiding the buffer tube and the optical fibres from a clenching capstan to a main capstan:
a) determining the value of a parameter indicative of a vibration of the buffer tube while the buffer tube is being guided from the clenching capstan to the main capstan; and
b) checking whether the value of the parameter is within a tolerance range around a nominal value, the tolerance range and nominal value being associated with a predefined target level of shrinkage of the buffer tube.

Preferably, step a) comprises determining a spectrum of frequencies of vibration of the buffer tube and determining the value of the parameter as a main frequency of vibration extracted from the spectrum.

According to embodiments of the invention, determining a spectrum of frequencies of vibration of the buffer tube comprises:
a1) detecting data indicative of the profile of the cable at the position of a laser line projected by a laser scanner and detecting, by an encoder, data indicative of an advancement of the cable from the clenching capstan to the main capstan;
a2) based on the detected data, providing a cloud of data points of a 3D model of the cable;
a3) projecting the 3D model on a plane and providing a set of data points of a 2D model of the cable; and
a4) providing a block of the set of data points and applying a Fast Fourier Transform algorithm thereon to determine the spectrum of frequencies of vibration of the buffer tube.

According to embodiments of the invention, step a) comprises determining the value of the parameter indicative of a vibration of the buffer tube as a function of time during a given time interval and the step b) comprises performing the checking throughout the given time interval and generating an alarm signal if the parameter falls out the tolerance range for the given time interval.

According to given embodiments of the invention, step a) comprises determining the value of one or more further parameters indicative of a vibration of the buffer tube while the buffer tube is being guided from the clenching capstan to the main capstan, the one or more further parameters being extracted from the spectrum and comprising one or more of: an amplitude associated with the main vibration frequency, a first harmonic frequency, an amplitude associated with the first harmonic frequency, a second harmonic frequency, an amplitude associated with the second harmonic frequency.

According to another aspect, the present invention provides a method for manufacturing a loose tube fiber optic cable comprising a buffer tube and one or more optical fibres contained therein, the method comprising guiding the buffer tube and the optical fibres from a clenching capstan to a main capstan and monitoring the shrinkage of the buffer tube by:
a) determining a parameter indicative of a vibration of the buffer tube while the buffer tube is being guided from the clenching capstan to the main capstan; and
b) checking whether the measured parameter is within a tolerance range around a nominal value, the tolerance range and nominal value being associated with a target level of shrinkage of the buffer tube.

According to a different aspect, the present invention provides a monitoring system for an apparatus for manufacturing a loose tube fiber optic cable, the loose tube fiber optic cable comprising a buffer tube and one or more optical fibres contained therein, the apparatus comprising a clenching capstan and a main capstan, the monitoring system being configured to monitor the shrinkage of the buffer tube while the buffer tube and the optical fibres are guided from the clenching capstan to the main capstan during the manufacturing of the loose tube fiber optic cable, the monitoring system comprising a processing unit configured to determine the value of a parameter indicative of a vibration of the buffer tube while the buffer tube is being guided from the clenching capstan to the main capstan, and to check whether the value of the parameter is within a tolerance range around a nominal value, the tolerance range and nominal value being associated with a predefined target level of shrinkage of the buffer tube.

Preferably, the processing unit is further configured to determine a spectrum of frequencies of vibration of the buffer tube and to determine the parameter as a main frequency of vibration extracted from the spectrum.

According to embodiments of the invention, the system further comprises a laser scanner and an encoder, wherein the laser scanner is configured to detect data indicative of the profile of the cable at the position of a laser line projected on the cable, and wherein the encoder is configured to detect data indicative of an advancement of the cable, the processing unit being further configured to, based on the detected data, provide a cloud of data points of a 3D model of the cable and to:
- project the 3D model on a plane and provide a set of data points of a 2D model of the cable; and
- provide a block of the set of data points and apply a Fast Fourier Transform algorithm thereon to determine the spectrum of frequencies of vibration of the buffer tube.

According to embodiments of the invention, the processing unit is further configured to determine the value of the parameter indicative of a vibration of the buffer tube as a function of time during a given time interval, to perform the checking throughout the given time interval and to generate an alarm signal if the parameter falls out the tolerance range for the given time interval.

According to given embodiments of the invention, the processing unit is configured to determine the value of one or more further parameters indicative of a vibration of the buffer tube while the buffer tube is being guided from the clenching capstan to the main capstan, the one or more further parameters being extracted from the spectrum and comprising one or more of: an amplitude associated with the main vibration frequency, a first harmonic frequency, an amplitude associated with the first harmonic frequency, a second harmonic frequency, an amplitude associated with the second harmonic frequency

Preferably, the monitoring system comprises a memory unit with a database comprising data correlating levels of shrinkage of the buffer tube to values of the parameter indicative of the vibration of the buffer tube.

According to a still another object, the present invention provides an apparatus for manufacturing a loose tube fiber optic cable, the loose tube fiber optic cable comprising a buffer tube and one or more optical fibres contained therein, the apparatus comprising a clenching capstan, a main capstan and a monitoring system for monitoring the shrinkage of the buffer tube while the buffer tube and the optical fibres are guided from the clenching capstan to the main capstan during the manufacturing of the loose tube fiber optic cable, the monitoring system being as set forth above.

### Brief description of the drawings

The present invention will become clearer from the following detailed description, given by way of example and not of limitation, to be read with reference to the accompanying drawings, wherein:
- Figure 1 schematically shows a manufacturing apparatus of a loose tube fiber optic cable;
- Figure 2 is a block scheme of a system for monitoring the shrinkage of the buffer tube according to embodiments of the present invention; and
- Figure 3 is a flowchart illustrating steps of a method for monitoring the shrinkage of the buffer tube according to embodiments of the present invention.

### Detailed description of preferred embodiments of the invention

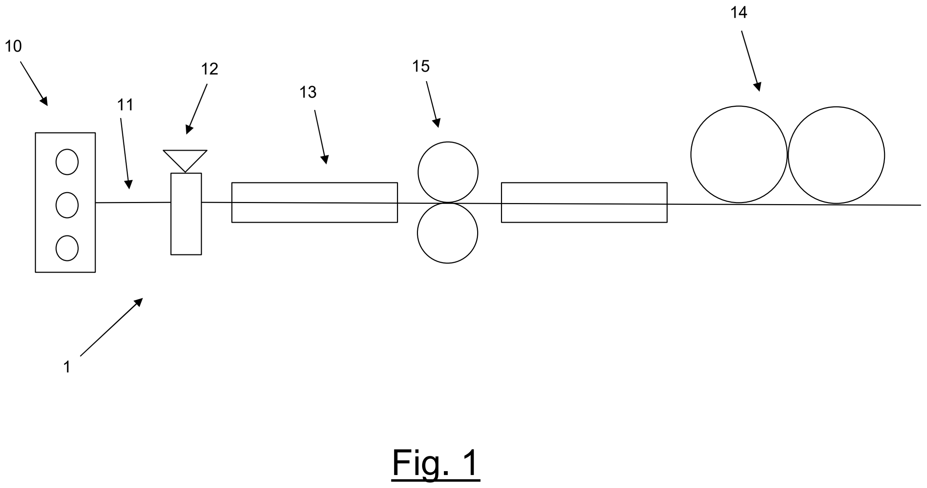

Figure 1 schematically shows a manufacturing apparatus comprising a production line of a loose tube fiber optic cable.

The manufacturing apparatus comprises one or more fiber payoff reels 10 with fibers 11 wound thereupon. In the schematic apparatus shown in Figure 1, the fibers 11 are unwound from the payoff reels 10 and guided towards an extruder 12, which forms a plastic coating around the fibers 11. The plastic material may be, for example, polybutylene terephthalate (PBT), polypropylene (PP), polyethylene (PE), polycarbonate (PC) or other. The assembly formed by the fibers and the plastic coating is guided to and pulled through a cooling trough 13 (for instance, a water-filled cooling vat) to a main capstan 14, which is located downstream the cooling trough 13. While the fibers and the plastic coating are passing in the cooling trough 13, the plastic coating solidifies thus forming a buffer tube. The buffer tube shrinks as it cools due to the thermal shrinkage of the polymer material of the plastic coating. The assembly formed by the buffer tube and the optical fibers contained therein will also be indicated as "cable" and identified by reference number 24 in the Figures.

The cooling trough 13 is divided into sections. A clenching capstan 15 is positioned between a first cooling trough section and a second cooling trough section. The clenching capstan 15 may be formed by a pair of pulleys. It is configured to grasp the outer surface of the buffer tube so as to compress the tube without acting on the fibers comprised therein, which are maintained in tension. The clenching capstan 15, in particular, is configured to be operated at a higher speed with respect to the main capstan 14 and thus the buffer tube is compressed while it is cooled down. This will lead to decreasing the amount of post extrusion shrinkage of the buffer tube.

The main capstan 14 may be a single or dual wheel capstan, or a belt capstan with pulleys. At the main capstan 14, the cable emerging from the second section of the cooling trough are repeatedly turned to couple the buffer tube and the fibers contained therein. After the main capstan, the cable is guided through a third section of the cooling trough (not shown in the drawings).

After being cooled down, the resulting cable is typically wound by an automatic take-up apparatus (not shown in the drawings).

The process for manufacturing the loose tube fiber optic cable comprises the following steps:
A) guiding the fibers 11 towards the extruder 12;
B) extruding a plastic coating around the fibers 11;
C) cooling down the assembly formed by the fibers and the extruded plastic coating; in this way the plastic coating solidifies forming the buffer tube;
D) passing the assembly formed by the fibers and the buffer tube through the clenching capstan 15 to compress the buffer tube (clenching process);
E) passing the cable through the main capstan 14 positioned downstream the clenching capstan 15, wherein the main capstan 14 is operated at a lower speed than the clenching capstan 15,
wherein both steps D) and E) are performed during cooling of the assembly formed by the fibers and the buffer tube.

The process for manufacturing the loose tube fiber optic cable, as well as the apparatuses mentioned herein above, are known and will not be described in further detail herein after.

As already described above, while being pushed by the clenching capstan, the buffer tube tension significantly decreases and a buffer tube vibration is generated along the effective length from the clenching capstan to the main capstan, where the buffer tube and the fibers are coupled. The vibration of the buffer tube depends on the elastic module of the buffer tube material, the pushing force provided by the clenching capstan and the effective length. It is correlated with the post extrusion shrinkage of the buffer tube.

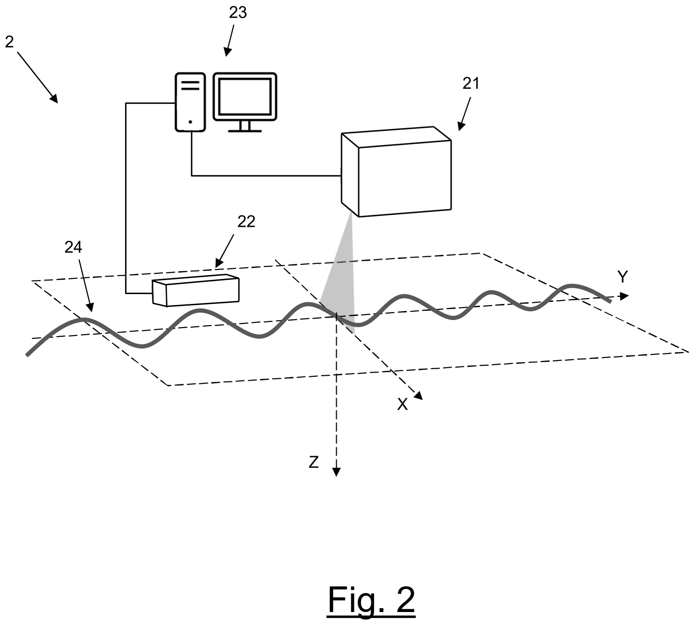

Figure 2 shows a block scheme of a system 2 for monitoring the shrinkage of the buffer tube according to embodiments of the present invention. The block scheme is represented in a Cartesian coordinate reference system X, Y, Z. According to embodiments of the present invention, the monitoring system 2 comprises a laser scanner 21, an encoder 22, a processing unit 23 and a memory unit comprising a database (not shown in the drawings). The laser scanner 21 and the encoder 22 are connected to (namely, they provide data to) the processing unit 23. Figure 2 also schematically shows the cable passing along the production line within the cooling through section between the clenching capstan and the main capstan (not shown); the cable is indicated by reference number 24. The Y axis represents the direction of advancement of the production line.

As anticipated, the laser scanner 21 and the encoder 22 of the monitoring system are preferably located downstream the clenching capstan, in particular between the clenching capstan and the main capstan.

The laser scanner 21 may be a known triangulation-based laser scanner. In particular, it may be a commercially available laser scanner, for instance the laser scanner model LLT 30x0-50 manufactured by Micro-Epsilon Messtechnik GmbH & Co. KG, Ortenburg, Germany. The encoder 22 could be a linear or rotary encoder such as the Incremental Rotary Encoder DFS60B-S4PK10000 manufactured by SICK AG, Waldkirch im Breisgau, Germany.

The processing unit 23 may be a personal computer or an analogous device with processing capabilities. It is configured to process the data provided by the laser scanner 21 and the encoder 22. Some of the processing operations executed by the processing unit 23 on the data provided by the laser scanner 21 and the encoder 22 are known in the prior art and will not de described in detail. The processing unit 23 preferably comprises a display and an input device, such as a keyboard, through which an operator may interact with the processing unit to visualize data and graphs and input commands.

The processing unit 23 is preferably connected to the memory unit comprising the database. According to some embodiments, the memory may be external to the processing unit 23 while according to other embodiments the memory unit may be integrated in the control unit 23.

The functioning of a laser scanner is known and it will only be briefly described in general terms herein after. When using a triangulation-based laser scanner, it outputs a laser beam which, through lenses, is enlarged to form a laser line and projected onto the object to be scanned (namely, in this case, the cable passing through the cooling-through) to detect data indicative of the profile of the object. The receiving optics of the laser scanner images the diffusely reflected light of this laser line onto a highly sensitive sensor matrix. The data (i.e. an image) detected by the sensor matrix are transferred to the control unit and used to determine the distance of the laser line from the laser scanner and the position alongside the laser line (X axis).

According to embodiments of the present invention, the encoder 22 provides the processing unit 23 with data indicative of the advancement of the cable along the production line, namely along the Y axis in the schematic configuration of Figure 2. In particular, the data detected by the encoder 22 is processed by the processing unit 23 to associate the data indicative of the profile of the cable detected by the laser scanner 21 with the position of the laser line along the direction of advancement of the cable (Y axis).

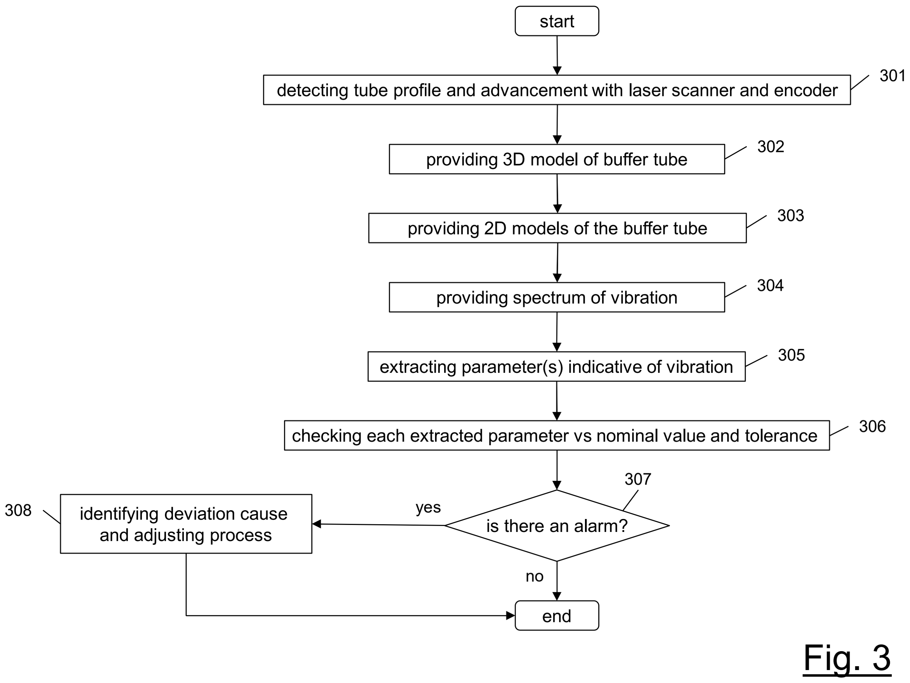

Figure 3 is a flow chart of the method for monitoring the shrinkage of the buffer tube according to embodiments of the present invention. The method is based on determining the vibration of the buffer tube along the effective length, namely on the operation of determining one or more parameters indicative of the vibration of the buffer tube, such as one or more frequencies of vibration (one main frequency and one or more harmonics) and/or an amplitude of the vibration at the considered frequencies, and on checking whether the values of these parameters are within respective tolerance ranges around nominal values associated with a predefined target level of the buffer tube shrinkage, as will be described herein below.

The method of the present invention, in particular, preferably comprises a calibration phase which is not illustrated in the flow chart of Figure 3. **It** is preferably performed off-line with respect to the actual monitoring of the cable during manufacturing. The calibration phase comprises creating and updating the database with data correlating different levels of buffer tube shrinkage to the values of the one or more parameters indicative of the vibration of the buffer tube along the effective length. As anticipated above, the one or more parameters may comprise one or more frequencies of vibration and/or one or more amplitudes of the vibration at the considered one or more frequencies. The one or more parameters may also comprise a pitch of the vibration, which is indicative of the distance between two points at equal amplitude of vibration along the vibrating buffer tube. The level of buffer tube shrinkage may be expressed as a percentage value, e.g. 0.2%.

The calibration phase, in particular, provides for determining, for each of the one or more parameters indicative of the buffer tube vibration, a corresponding nominal value and a tolerance range. The determination of the nominal values and tolerance ranges may be performed by:
- collecting a set of measurements of the buffer tube shrinkage by varying the vibration conditions of the buffer tube passing through the clenching capstan; and
- for each considered parameter, determining a nominal value thereof associated with a predefined target level of the buffer tube shrinkage, for example 0,2%;
- for each considered parameter, determining a predefined tolerance range of values around the nominal value, which sets predefined boundaries within which any deviation of the considered parameter from its nominal value is considered acceptable (namely, the tolerance range is associated with a corresponding acceptable deviation of the level of the buffer tube shrinkage from the target level).

It is to be noticed that, according to the present invention, a different calibration phase is provided for each different type of considered buffer tube (a type of buffer tube being identified by one or more of the following features: diameter, material, thickness, fiber count).

The following steps then preferably implement the method of the present invention in-line with respect to the process of manufacturing of the cable, in particular when the buffer tube and the optical fibers are being guided along the effective length from the clenching capstan to the main capstan.

According to the present invention, the profile of the cable 24 is detected at the position of the laser line projected by the laser scanner 21 for a given amount of time referred to as monitoring window. The profile of the cable 24 is composed of digitally sampled data; these data are processed together with the data provided by the encoder 22 to provide a 3D model representing the 3D shape of the cable, which is then projected on one or more 2D planes (e.g., a horizontal and/or vertical plane) to provide respective one or more 2D models representing 2D shapes of the cable. The 3D model of the cable comprises a cloud of digitally sampled data points. A 2D model comprises a set of digitally sampled data points. A given block of the set of data points of a 2D model is then fed to a Fast Fourier Transform algorithm to compute the spectrum of frequencies at which the buffer tube is currently vibrating. Spectra provided at different times within the monitoring windows are then processed and parameters are extracted therefrom, which are checked against their nominal values. In case any one of the extracted parameters falls out a tolerance range around its nominal value for a given time interval, an alarm is produced.

More in particular, at step 301, the method provides for detecting the profile of the cable 24 by using the data provided by the laser scanner 21 and detecting the advancement of the cable 24 by using the data provided by the encoder 22 within the monitoring window, as described above. At step 302, the processing unit 23 preferably provides a 3D model of the cable comprising a point cloud, i.e. a discrete set of data points in space. Each data point is represented by its X, Y, Z coordinates. The points represent the current 3D shape of the cable. The processing operations of steps 301 and 302 are known in the art.

At step 303, the method provides for processing the 3D point cloud provided at step 302 and providing one or more different sets of data points representing the current shape of the cable on 2D planes. Each set of data points corresponds to a 2D model of the cable. According to embodiments of the present invention, at step 303, the processing unit 23 preferably provides a first set of data points which represents the shape of the cable as seen from above, and a second set of data points which represents the shape of the cable as seen from the side. For instance, the points of the first set of data points belong to a 2D plane parallel to the XY plane shown in Figure 2, while the second set of data points belong to a 2D plane parallel to the YZ plane shown in Figure 2.

At step 304 a Fast Fourier Transform algorithm is applied to a block of data points of the first set of data points to provide a corresponding spectrum of frequencies of the current buffer tube vibration (also called "instantaneous" spectrum), which is associated with a given moment of time within the monitoring window.

The FFT algorithm is preferably applied to different blocks of the first set of data points. Indeed, applying the FFT algorithm to different blocks of the first set of data provides different instantaneous spectra associated with different times within the monitoring window. When "laid side by side", the instantaneous spectra may form a spectrogram showing the evolution of the buffer tube vibration over time during the monitoring window, e.g. in a few seconds of observation. The data are then preferably stored in the database.

The operations of step 304 as described above are preferably applied also to the second set of data points, so that the two 2D models of the cable are processed to provide the instantaneous spectra of the buffer tube vibration. These data are also preferably stored in the database.

At step 305, the control unit 23 preferably processes the instantaneous spectra of frequencies of the buffer tube vibration to extract therefrom the one or more parameters indicative of the cable vibration over time. **In** particular, a respective set of extracted parameters may be provided for each instantaneous spectrum of the vibration. The one or more parameters of a set of extracted parameters preferably include one or more frequencies of vibration and the corresponding amplitudes of vibration. The parameters may also include the pitch of the vibration ad defined above. In particular, according to the present invention, the one or more parameters include:
- a main vibration frequency and an amplitude associated with the main vibration frequency.

According to specific embodiments of the present invention, the one or more parameters may further include:
- a first harmonic frequency and an amplitude associated with the first harmonic frequency;
- a second harmonic frequency and an amplitude associated with the second harmonic frequency; and
- a pitch.

According to other embodiments of the present invention, the one or more parameters may further include:
- a third harmonic frequency and an amplitude associated with the third harmonic frequency; and
- a fourth harmonic frequency and an amplitude associated with the fourth harmonic frequency.

Then, at step 305, the extracted parameters are stored in the database at the memory unit as a collection of sets of extracted parameters, each set being preferably stored together with the respective instantaneous spectrum of the vibration.

According to embodiments of the present invention, at step 306, for the sets of extracted parameters within the monitoring window, the control unit 23 preferably checks whether each extracted parameter falls in the tolerance range around its nominal value. For instance, the control unit 23 may check whether the main vibration frequency falls in a tolerance range of ± 50 Hz around a nominal value of 100 Hz. A table may be presented to the operator on the display of the control unit 23 showing the values of the extracted parameters possibly against their nominal values and tolerance ranges and indicating whether each parameter falls in the tolerance range by, e.g., using a green colour for a parameter which is close to the nominal value, an orange colour for a parameter which is inside the tolerance range and a red colour for a parameter which is outside the tolerance range.

At step 307, the control unit 23 preferably processes the sets of extracted parameters that have been stored and preferably determines whether any one of the extracted parameters falls out of the predefined boundaries identified by the tolerance range for a given time interval within the monitoring window. This given time interval may be equal to a few seconds, e.g. 5 to 10 seconds. In case at least one of the extracted parameters, e.g. the amplitude of vibration at the main frequency of vibration, is out of the predefined boundaries identified by its tolerance range for the given time interval indicated above, the control unit 23 preferably generates an alarm signal. The alarm signal may be output to the operator in the form of a visual alarm signal (e.g. an alarm message shown on the display of the control unit) and/or an audio alarm signal. The alarm signal may be registered in a log file written by the control unit 23 to keep track of it.

In case the check at step 307 indicates a deviation of at least one parameter from its tolerance range over the given time interval, the method may further comprise, at step 308, identifying the cause of the deviation and adjusting the manufacturing process to remove it. For instance, the operator may increase or decrease the speed of the clenching capstan.

The system and method of the present invention allows to monitor, in real time along the cable production line, the stability of the clenching process by monitoring the vibration of the buffer tube, namely by monitoring parameters such as the frequency and amplitude of the buffer tube vibration through the section between the position of the clenching capstan and the position of the main capstan. The system and method also allow to evaluate whether this vibration is maintained between predefined boundaries. This allows immediate feedback during the process to know that the buffer tube is being compressed properly.

## Claims

1. A method for monitoring the shrinkage of a buffer tube in a loose tube fiber optic cable (24), the cable (24) comprising one or more optical fibres contained in said buffer tube, the method comprising, during the manufacturing of said loose tube fiber optic cable (24), which comprises guiding said buffer tube and said optical fibres from a clenching capstan (15) to a main capstan (14):
a) determining the value of a parameter indicative of a vibration of said buffer tube while said buffer tube is being guided from said clenching capstan (15) to said main capstan (14); and
b) checking whether said value of said parameter is within a tolerance range around a nominal value, said tolerance range and nominal value being associated with a predefined target level of shrinkage of said buffer tube.

2. The method according to claim 1, wherein said step a) comprises determining a spectrum of frequencies of vibration of said buffer tube and determining the value of said parameter as a main frequency of vibration extracted from said spectrum.

3. The method according to claim 2, wherein said determining a spectrum of frequencies of vibration of said buffer tube comprises:
a1) detecting data indicative of the profile of the cable (24) at the position of a laser line projected by a laser scanner (21) and detecting, by an encoder (22), data indicative of an advancement of the cable (24) from said clenching capstan (15) to said main capstan (14);
a2) based on the detected data, providing a cloud of data points of a 3D model of the cable (24);
a3) projecting said 3D model on a plane and providing a set of data points of a 2D model of the cable (24); and
a4) providing a block of said set of data points and applying a Fast Fourier Transform algorithm thereon to determine said spectrum of frequencies of vibration of the buffer tube.

4. The method according to any of the preceding claims, wherein said step a) comprises determining the value of the parameter indicative of a vibration of the buffer tube as a function of time during a given time interval and said step b) comprises performing said checking throughout said given time interval and generating an alarm signal if said parameter falls out said tolerance range for the given time interval.

5. The method according to any of claims 2 to 4, wherein said step a) comprises determining the value of one or more further parameters indicative of a vibration of said buffer tube while said buffer tube is being guided from said clenching capstan (15) to said main capstan (14), said one or more further parameters being extracted from said spectrum and comprising one or more of: an amplitude associated with the main vibration frequency, a first harmonic frequency, an amplitude associated with the first harmonic frequency, a second harmonic frequency, an amplitude associated with the second harmonic frequency.

6. A method for manufacturing a loose tube fiber optic cable comprising a buffer tube and one or more optical fibres contained therein, the method comprising guiding said buffer tube and said optical fibres from a clenching capstan to a main capstan and monitoring the shrinkage of the buffer tube by:
a) determining a parameter indicative of a vibration of said buffer tube while said buffer tube is being guided from said clenching capstan to said main capstan; and
b) checking whether said measured parameter is within a tolerance range around a nominal value, said tolerance range and nominal value being associated with a target level of shrinkage of said buffer tube.

7. A monitoring system (1) for an apparatus for manufacturing a loose tube fiber optic cable (24), the loose tube fiber optic cable (24) comprising a buffer tube and one or more optical fibres contained therein, the apparatus comprising a clenching capstan (15) and a main capstan (14), said monitoring system being configured to monitor the shrinkage of said buffer tube while said buffer tube and said optical fibres are guided from the clenching capstan (15) to the main capstan (14) during the manufacturing of the loose tube fiber optic cable (24), the monitoring system (1) comprising a processing unit (23) configured to determine the value of a parameter indicative of a vibration of said buffer tube while said buffer tube is being guided from said clenching capstan (15) to said main capstan (14), and to check whether said value of said parameter is within a tolerance range around a nominal value, said tolerance range and nominal value being associated with a predefined target level of shrinkage of said buffer tube.

8. The monitoring system (1) according to claim 7, wherein said processing unit (23) is further configured to determine a spectrum of frequencies of vibration of said buffer tube and to determine said parameter as a main frequency of vibration extracted from said spectrum.

9. The monitoring system (1) according to claim 7 or 8, the system (1) further comprising a laser scanner (21) and an encoder (22), wherein the laser scanner (21) is configured to detect data indicative of the profile of the cable (24) at the position of a laser line projected on the cable (24), and wherein the encoder (22) is configured to detect data indicative of an advancement of the cable (24), the processing unit (23) being further configured to, based on the detected data, provide a cloud of data points of a 3D model of the cable (24) and to:
- project said 3D model on a plane and provide a set of data points of a 2D model of the cable (24); and
- provide a block of said set of data points and apply a Fast Fourier Transform algorithm thereon to determine said spectrum of frequencies of vibration of the buffer tube.

10. The monitoring system (1) according to any of claims 7 to 9, wherein said processing unit (23) is further configured to determine the value of the parameter indicative of a vibration of the buffer tube as a function of time during a given time interval, to perform said checking throughout said given time interval and to generate an alarm signal if said parameter falls out said tolerance range for the given time interval.

11. The monitoring system (1) according to any of claims 8 to 10, wherein said processing unit (23) is configured to determine the value of one or more further parameters indicative of a vibration of said buffer tube while said buffer tube is being guided from said clenching capstan (15) to said main capstan (14), said one or more further parameters being extracted from said spectrum and comprising one or more of: an amplitude associated with the main vibration frequency, a first harmonic frequency, an amplitude associated with the first harmonic frequency, a second harmonic frequency, an amplitude associated with the second harmonic frequency

12. The monitoring system (1) according to any of claims 7 to 10, further comprising a memory unit with a database comprising data correlating levels of shrinkage of the buffer tube to values of said parameter indicative of the vibration of the buffer tube.

13. An apparatus for manufacturing a loose tube fiber optic cable (24), the loose tube fiber optic cable (24) comprising a buffer tube and one or more optical fibres contained therein, the apparatus comprising a clenching capstan (15), a main capstan (14) and a monitoring system (1) for monitoring the shrinkage of said buffer tube while said buffer tube and said optical fibres are guided from the clenching capstan (15) to the main capstan (14) during the manufacturing of the loose tube fiber optic cable (24), the monitoring system being according to any of claims 7 to 11.
